# EUROPEAN PATENT SPECIFICATION

(11) **EP 4 354 123 B1**
(45) Date of publication and mention of the grant of the patent: **01.04.2026**
(21) Application number: 22881191.5
(22) Date of filing: 22.08.2022
(51) Int. Cl.: G01N 21/952, G01N 21/88, H01M 50/107

(54) **DEVICE FOR INSPECTING LATERAL SURFACE OF CYLINDRICAL BATTERY**
VORRICHTUNG ZUR PRÜFUNG DER SEITLICHEN OBERFLÄCHE EINER ZYLINDRISCHEN BATTERIE
DISPOSITIF D'INSPECTION DE SURFACE LATÉRALE D'UNE PILE CYLINDRIQUE

(30) Priority: 15.10.2021 KR 20210137099
(43) Date of publication of application: 17.04.2024
(73) Proprietor: LG Energy Solution, Ltd., Seoul 07335 (KR)
(72) Inventor: KIM, Tae Young, Daejeon 34122 (KR); HONG, Seung Gyun, Daejeon 34122 (KR)
(74) Representative: Goddar, Heinz J.
(86) International application number: PCT/KR2022/012506
(87) International publication number: WO 2023/063561

(56) References cited:
- EP-A1- 0 639 764
- JP-A- 2007 017 194
- KR-A- 20110 018 080
- KR-A- 20130 090 267
- KR-A- 20200 007 292
- KR-A- 20210 083 686
- US-B1- 6 516 083

## Description

### [Technical Field]

The present application claims the benefit of priority based on Korean Patent Application No. 10-2021-0137099 filed on October 15, 2021.

The present disclosure relates to a side surface inspection device for a cylindrical battery. More specifically, the present disclosure relates to a side surface inspection device for a cylindrical battery capable of performing a side surface exterior test without rotating and rolling the cylindrical battery.

### [Background Art]

With increasing technological development and demand for mobile devices, a rechargeable secondary battery is widely used as energy sources for various mobile devices. In addition, the secondary battery is attracting attention as an energy source for an electric vehicle, a hybrid vehicle and the like, which are proposed as a solution to air pollution caused by existing gasoline and diesel vehicles.

The secondary battery is classified into a coin-shaped battery, a cylindrical battery, a prismatic battery, and a pouch-shaped battery depending on the shape of the battery case. Among them, when testing the side surface exterior of the cylindrical battery, the battery needs to be rotated or rolled 360 degrees to acquire an image, and there is a problem that a noise is generated in the image when the battery is rotated or rolled, resulting in deterioration of image quality and detectability of the test device.

### [Prior Art Document]

### [Patent Document]

(Patent Document 1) Korean Laid-open Patent Publication No. 10-2021-0103180 (August 23, 2021)
US 6 516 083 B1 and EP 0 639 764 A1 respectively describe side surface inspection devices specifically designed for inspection of cigarettes.

### [Disclosure]

### [Technical Problem]

An object of the present disclosure is to provide a side surface inspection device for a cylindrical battery capable of performing a side surface exterior test without rotating and rolling the cylindrical battery.

Another object of the present disclosure is to provide a side surface inspection device for a cylindrical battery that can prevent image noise and improve image quality and detectability of the test device.

### [Technical Solution]

In order to solve the above problems, the present invention provides a side surface inspection device for a cylindrical battery according to claim 1. Particular embodiments of the invention are given by the dependent claims.

### [Advantageous Effects]

One of the effects of the present disclosure is that it is possible to provide a side surface inspection device for a cylindrical battery capable of performing a side surface exterior test without rotating or rolling the cylindrical battery.

The other one of the effects of the present disclosure is to provide a side surface inspection device for a cylindrical battery that can prevent image noise and improve image quality and detectability of the test device.

### [Description of Drawings]

FIG. 1 is a schematic view of a cylindrical battery.
FIG. 2 is a perspective view of a side surface inspection device for a cylindrical battery according to an embodiment of the present invention.
FIG. 3 is a cross-sectional view of the side surface inspection device for a cylindrical battery according to an embodiment of the present invention.
FIG. 4 is a plan view of a first light of the side surface inspection device for a cylindrical battery according to an embodiment of the present invention.
FIG. 5 is a plan view of a second light of the side surface inspection device for a cylindrical battery according to an embodiment of the present invention.

### [Mode for Invention]

Embodiments of the present invention will be described below in detail with reference to the accompanying drawings. For convenience of explanation, the drawings may exaggerate all or part of the configuration.

Furthermore, the present invention is not limited to the accompanying drawings or the contents described in this specification, and it is obvious to those skilled in the art that the present invention can be embodied in various forms without departing from the present invention.

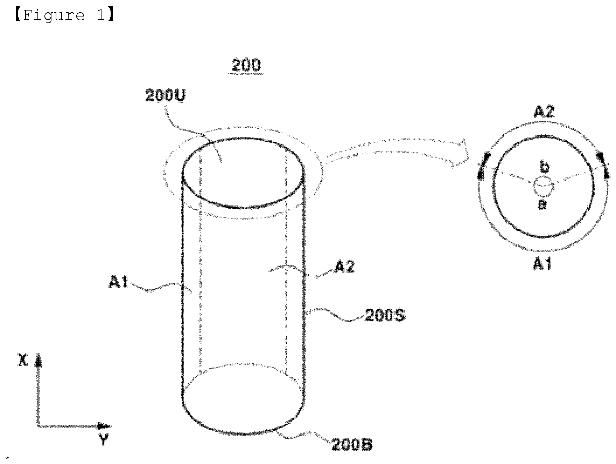

FIG. 1 is a schematic view of a cylindrical battery.

Referring to the drawings, a cylindrical battery 200 has a generally cylindrical shape. The cylindrical battery 200 has an upper surface 200U, a lower surface 200B, and a curved side surface 200S that connects the upper surface 200U and the lower surface 200B.

The cylindrical battery 200 is described herein as having a first region A1 that is a part of side surface 200S and a second region A2 that is a remaining part of side surface 200S. The first region A1 and the second region A2 are sequentially disposed along the circumference of the cylindrical battery 200. However, the first region A1 and the second region A2 are configured to distinguish each region of the side surface 200S of the cylindrical battery 200 from each other, and the first region A1 and the second region (A2) do not have a boundary identified visibly from each other.

The first region A1 means a region to be tested when testing by the side surface inspection device for a cylindrical battery 100 according to an embodiment of the present invention. In other words, the first region A1 means a region included in an image captured by a camera 140, which will be described later. However, the first region A1 does not mean an absolute specific region of the side surface 200S of the cylindrical battery 200, and the positions of each of the first region A1 and the second region A2 may vary in the cylindrical battery 200 depending on to the arrangement form of the cylindrical battery 200 at the time of the side surface test.

The first region A1 is more than half of the side surface 200S of the cylindrical battery 200. That is, an angle (a) formed by the first region A1 and an axis of the cylindrical battery 200 on the cross section is 180° or more. In other words, the first region A1 is a side surface region 200S that is obtained by dividing the cylindrical battery 200 at an angle of 180° or more on the basis of the axis. Here, the cross section means a plane parallel to each of the upper surface 200U and the lower surface 200B of the cylindrical battery 200, and means a Y-Z plane defined by the Y direction Y and the Z direction Z on the drawing. In addition, the axis of the cylindrical battery 200 means an imaginary line passing through the centers of each of the upper surface 200U and the lower surface 200B of the cylindrical battery 200, and means a central axis of the cylindrical battery 200 in the X direction X on the drawing. Accordingly, an angle (b) formed by the second region A2 and the axis of the cylindrical battery 200 on the cross section is 180° or less. For example, on the cross section, the angle (a) formed by the first region A1 with the axis of the cylindrical battery 200 may be 210°, and the angle (b) formed by the second region A2 with the axis of the cylindrical battery 200 may be 150°. However, needless to say, the angles (a) and (b) are not limited thereto.

In this way, the present disclosure is intended to acquire the exterior image of the entire region of the first region A1, which is more than half of the side surface 200S of the cylindrical battery 200, at once, and to test the side surface 200S without rotating and rolling the cylindrical battery 200.

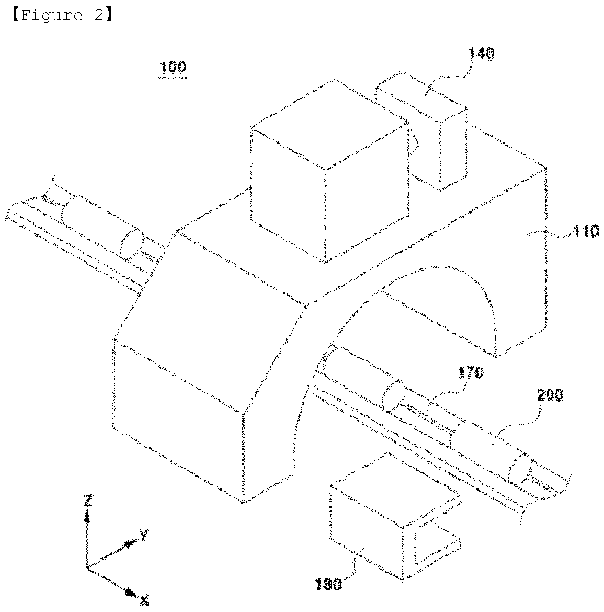

FIG. 2 is a perspective view of a side surface inspection device for a cylindrical battery according to an embodiment of the present invention.

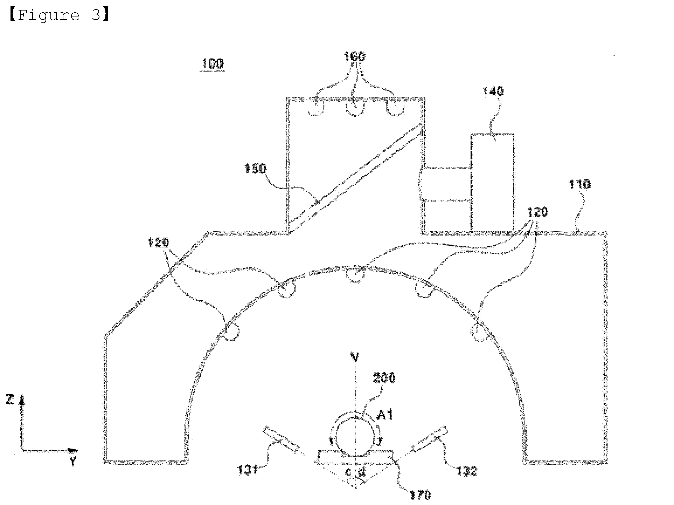

FIG. 3 is a cross-sectional view of a side surface inspection device for a cylindrical battery according to an embodiment of the present invention.

Referring to the drawings, a side surface inspection device for a cylindrical battery 100 according to an embodiment of the present invention includes at least one of a housing 110, a first light 120, a first mirror 131, a second mirror 132, a camera 140, a third mirror 150, a second light 160, a conveyer 170, and an inverter 180.

The housing 110 is disposed on the side surface 200S of the cylindrical battery 200 and surrounds at least the first region A1 of the cylindrical battery 200. The housing 110 surrounds the first region A1 of the cylindrical battery 200 and can further surround at least a part of the second region A2. For example, the cylindrical battery 200 may be disposed in a lying form with side surface 200S facing upward, and the housing 110 may be placed on the top of the cylindrical battery 200, as shown in the drawings. The shape of the housing 110 is not particularly limited, but the inner surface of the housing 110 may have a dome shape.

The first light 120 is disposed on the inner surface of the housing 110 to emit light to the cylindrical battery 200. In the drawings, although the first light 120 is disposed to protrude from the inner surface of the housing 110, the first light 120 may be embedded in the inner surface of the housing 110 so that at least a part thereof is exposed. Specifically, the first light 120 emits light to the side surface 200S of the cylindrical battery 200. Preferably, the first light 120 can emit light to the entire first region A1 of the cylindrical battery 200. However, the first light 120 can further emit light to at least a part of the second region A2 of the cylindrical battery 200, for example, can further emit light to a region of the second region A2 adjacent to the first region A1. As described above, the inner surface of the housing 110 can have a dome shape, and the first light 120 disposed on the inner surface of the housing 110 is disposed in a generally rounded form, and can emit light to the side surface 200S of the cylindrical battery 200.

The first mirror 131 and the second mirror 132 are disposed on each of both side parts of the cylindrical battery 200 to each reflect the region of the first region A1 of the cylindrical battery 200 adjacent to the second region A2. On the basis of the drawings, a first mirror 131 is disposed on a left side of the cylindrical battery 200 and a second mirror 132 is disposed on a right side of the cylindrical battery 200.

The first mirror 131 and the second mirror 132 are each disposed obliquely on the side parts of the cylindrical battery 200 to reflect the region of the first region A1 of the cylindrical battery 200 adjacent to the second region A2. Specifically, the first mirror 131 and the second mirror 132 may be disposed such that angles (c, d) formed with a straight line v passing through the center of the first region A1 and the center of the second region A2 on the cross section is approximately 45°, but the angles (c, d) are not limited thereto. Although the angle (c) formed by the first mirror 131 with the straight line v passing through the center of the first region A1 and the center of the second region A2 on the cross section is preferably the same as the angle (d) formed by the second mirror 132 with the straight line v passing through the center of the first region A1 and the center of the second region A2 on the cross section, the angles (c, d) may be different from each other. The cross section here also means a plane parallel to each of the upper surface 200U and the lower surface 200B of the cylindrical battery 200, and means the Y-Z plane formed by the Y direction Y and the Z direction Z on the drawing.

The camera 140 captures at least a part of the first region A1 of the cylindrical battery 200, the image reflected on the first mirror 131, and the image reflected on the second mirror 132. That is, the camera 140 captures at least a part of the first region A1 of the cylindrical battery 200, the region adjacent to the second region A2 in the first region A1 reflected on the first mirror 131, and the region adjacent to the second region A2 in the first region A1 second region reflected on the second mirror 132. At this time, the partial region of the first region A1 reflected on the first mirror 131 or the second mirror 132 includes all regions in the first region A1 that cannot be captured by the camera 140 when the first mirror 131 or the second mirror 132 does not exist. Therefore, since the first mirror 131 and the second mirror 132 exist, the image captured by the camera 140 can include the image of the entire region of the first region A1 of the cylindrical battery 200. As a result, the side surface inspection device for a cylindrical battery 100 according to the present invention acquires the exterior image of the entire first region A1, which is more than half of the side surface 200S of the cylindrical battery 200, at once, thereby testing the side surface 200S without rolling and rolling the cylindrical battery 200.

On the other hand, when the camera 140 is not disposed to face the side surface 200S of the cylindrical battery 200 so as to directly capture at least a part of the first region A1 of the cylindrical battery 200, the image reflected on the first mirror 131 and the image reflected on the second mirror 132, the side surface inspection device for a cylindrical battery 100 may further include a third mirror 150. At this time, the camera 140 captures the image reflected on the third mirror 150 to indirectly capture at least a part of the 1 region A1, the image reflected on the first mirror 131, and the image reflected on the second mirror 132. That is, the camera 140 captures an image including at least a part of the first region A1 of the cylindrical battery 200 reflected on the third mirror 150, the image reflected on the first mirror 131, and the image reflected on the second mirror 132.

The third mirror 150 is obliquely disposed on the side surface 200S of the cylindrical battery 200, and reflects at least a part of the first region A1 of the cylindrical battery 200, the image reflected on the first mirror 131, and the image reflected on the second mirror 132. On the basis of the drawings, the third mirror 150 may be obliquely disposed to face between the Y-direction and the Z-direction. The third mirror 150 may be disposed so that at least a part of the first region A1 of the cylindrical battery 200, the image reflected on the first mirror 131 and the image reflected on the second mirror 132 are incident and reflected at an angle of about 45. At this time, it goes without saying that the camera 140 may be disposed to face the light reflected by the third mirror 150.

The side surface inspection device for a cylindrical battery 100 may further include a second light 160. The second light 160 is disposed on the third mirror 150 to emit light to the cylindrical battery 200. The second light 160 can be coaxial light. The second light 160 is an additional configuration, and can be introduced to improve the visibility of defects of the cylindrical battery 200.

The conveyer 170 conveys the cylindrical battery 200 in the axial direction X of the cylindrical battery 200 so that the cylindrical battery 200 passes through the housing 110. The cylindrical battery 200 is conveyed through the conveyer 170, stops for a certain period of time after reaching the test region of the housing 110, and is captured by the camera 140, thereby performing side surface test of the cylindrical battery 200. The cylindrical battery 200 that has been tested is conveyed to the subsequent process through the conveyer 170 again.

The inverter 180 inverts the cylindrical battery 200 captured by the camera 140. That is, the inverter 180 redisposes the cylindrical battery 200 in a state of being rotated by 180°. Referring to the drawings, the inverter 180 inverts the cylindrical battery 200 upside down in the Z direction Z. Therefore, the opposite side surface of the cylindrical battery 200 on which the side surface test is not performed can also be subjected to the side surface test by the same device as the side surface inspection device for a cylindrical battery 200 described above. Since the first region A1 to be tested is half or more of the side surface 200S of the cylindrical battery 200, a part of the test region can overlap each other at the time of the first side surface test and the second side surface test. At this time, the side surface test of the opposite side of the cylindrical battery 200 on which the side surface test is not performed can be performed by a separate side surface inspection device for a cylindrical battery 200 for smooth process flow. That is, the side surface inspection device for a cylindrical battery 200 can include a pair of side surface inspection device for a cylindrical batterys 200 for testing each of both side surfaces of the cylindrical battery 200. However, in order to reduce costs, one side surface inspection device for a cylindrical battery 200 may test each of both side surfaces of the cylindrical battery 200.

On the other hand, in general, when testing the side surface of the cylindrical battery, the battery needs to be rotated or rolled by 360 degrees to acquire an image, and when the battery rotates or rolls, noise occurs in the image, and there is a problem of deterioration of image quality and detectability of the test device. In addition, there is a problem that it is difficult to ensure the visibility of the defect due to shadows caused by the curved surface, as it goes away the image-capturing center.

Since the side surface inspection device for a cylindrical battery 100 according to an embodiment of the present invention includes the first mirror 131 and the second mirror 132, an entire image of the first region A1, which is more than half of the side surface 200S of the cylindrical battery 200, can be acquired through one image-capturing. That is, it is possible to test the entire region of the side surface 200S of the cylindrical battery 200 by testing one side surface and the other side surface of the cylindrical battery 200 twice. Furthermore, it is possible to sufficiently ensure the visibility of defects even in a region adjacent to the second region A1 far from the central part in the first region A1 to be tested. As a result, it is possible to provide a side surface inspection device for a cylindrical battery capable of performing a side surface exterior test without rotating or rolling the cylindrical battery. Further, it is possible to provide a side surface inspection device for a cylindrical battery that can prevent image noise and improve image quality and detectability of the test device.

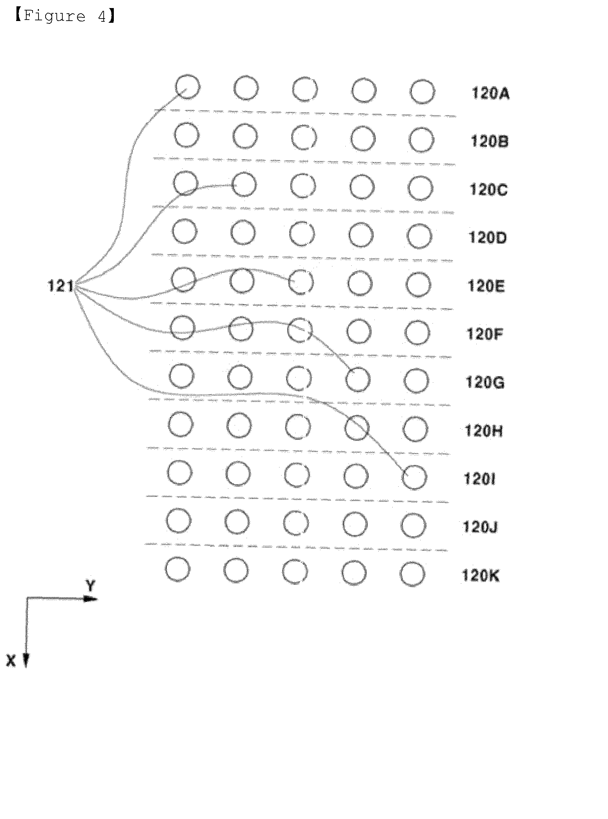

FIG. 4 is a plan view of the first light of the side surface inspection device for a cylindrical battery according to one embodiment of the present invention.

The first light 120 includes a plurality of first lighting units 120A to 120K disposed along the axial direction X of the cylindrical battery 200. In the drawing, although eleven first lighting units 120A to 120K are formed, this is an example, and the number of first lighting units 120A to 120K is not particularly limited.

Each of the plurality of first lighting units 120A to 120K may include a plurality of light emitters 121. However, each of the plurality of first lighting units 120A to 120K may include a singular light emitter 121. The light emitter 121 may be an LED. For the sake of convenience, only some of the plurality of light emitters 121 are denoted by reference numerals in the drawing.

The camera 140 is configured to capture at least a part of the first region A1 of the cylindrical battery 200, the image reflected on the first mirror 131, and the image reflected on the second mirror 132 multiple times. At this time, when the first light 120 includes a plurality of first lighting units 120A to 120K, the plurality of first lighting units 120A to 120K are configured to emit light to the cylindrical battery 200 with different combinations in each of the multiple images capturing. Accordingly, by changing the emission angle of light, the visibility of defects of the cylindrical battery 200 can be improved.

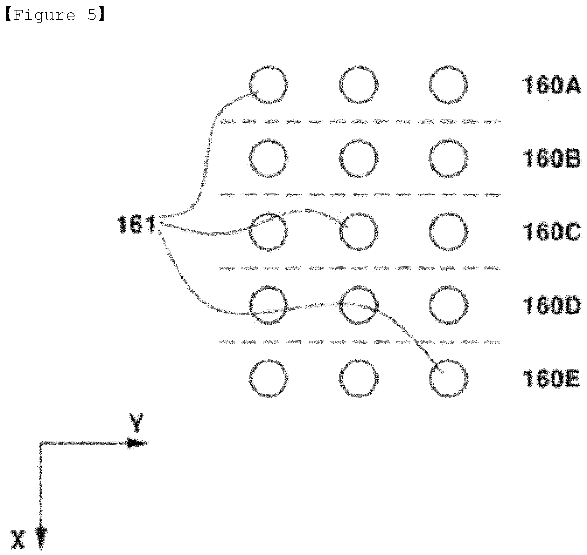

FIG. 5 is a plan view of the second light of the side surface inspection device for a cylindrical battery according to an embodiment of the present invention.

The second light 160 may include a plurality of second lighting units 160A to 160E disposed along the direction of the cylindrical battery 200. Although five second lighting units 160A to 160E are shown in the drawing, this is an example, and the number of second lighting units 160A to 160E is not particularly limited.

Each of the plurality of second lighting units 160A to 160E can include a plurality of light emitters 161. However, each of the plurality of second lighting units 160A to 160E can include a singular light emitter 161. The light emitter 161 may be an LED. For convenience of illustration, only some of the plurality of light emitters 161 are denoted by reference numerals in the drawings.

The camera 140 can capture at least a part of the first region A1 of the cylindrical battery 200, the image reflected on the first mirror 131, and the image reflected on the second mirror 132 multiple times. At this time, when the second light 160 includes a plurality of second lighting units 160A to 160E, the plurality of second lighting units 160A to 160E can emit light to the cylindrical battery 200 with different combinations in each of the multiple images capturing. Accordingly, by changing the emission angle of light, the visibility of defects of the cylindrical battery 200 can be further improved.

Table 1 shows exemplary combinations of the plurality of first lighting units 120A to 120K and the plurality of second lighting units 160A to 160E that emit light to the cylindrical battery 200 in each of the multiple images capturing. However, this is only an exemplary combination, and needless to say, the combination of the plurality of first lighting units 120A to 120K and the plurality of second lighting units 160A to 160E that emit light to the cylindrical battery 200 for each of the multiple image capturing is not limited to the combination shown in Table 1.

In Table 1, "O" means that the lighting unit is turned on to emit light to the cylindrical battery 200, and "X" means that the lighting unit is turned off to not emit light to the cylindrical battery 200.

**[Table 1]**

| | First image capturing | Second image capturing | Third image capturing | Fourth image capturing |
|---|---|---|---|---|
| First lighting unit (120A) | X | O | O | X |
| First lighting unit (120B) | X | X | O | O |
| First lighting unit (120C) | O | X | X | O |
| First lighting unit (120D) | O | O | X | X |
| First lighting unit (120E) | X | O | O | X |
| First lighting unit (120F) | X | X | O | O |
| First lighting unit (120G) | O | X | X | O |
| First lighting unit (120H) | O | O | X | X |
| First lighting unit (120I) | X | O | O | X |
| First lighting unit (120J) | X | X | O | O |
| First lighting unit (120K) | O | X | X | O |
| Second lighting unit (160A) | O | O | X | X |
| Second lighting unit (160B) | X | O | O | X |
| Second lighting unit (160C) | X | X | O | O |
| Second lighting unit (160D) | O | X | X | O |
| Second lighting unit (160E) | O | O | X | X |

When the plurality of first lighting units 120A to 120K and the plurality of second lighting units 160A to 160E emit light to the cylindrical battery 200 by different combinations, the visibility of defects of the cylindrical battery 200 can be further improved.

In the above, although the present invention has been described with reference to limited embodiments and drawings, the present invention is not limited thereto, and also it is apparent that various modifications and variations can be made by those of ordinary skill in the art to which the present invention pertains within the scope of equivalents of the present invention and the claims to be described below.

In this specification, the order such as first and second is to distinguish components from each other and does not imply a priority between components or an absolute order. In some parts of the specification, the first component may be referred to as the second component in other parts of the specification.

The terms and expressions herein should be interpreted broadly and not in a restrictive sense. As used herein, the term "comprising" does not exclude the presence or addition of one or more other components in addition to the recited components.

In this specification, the singular forms include the plural forms unless the context clearly dictates otherwise.

Each embodiment described herein as an example is combinable with each other, and unless inconsistent, contents described in one embodiment can be similarly applied to other embodiments even if not described in other embodiments. The scope of protection of the present invention is defined exclusively by the appended claims.

## Claims

1. A side surface inspection device (100) for a cylindrical battery (200) that has a first region (A1) as a part of a side surface (200S) and a second region (A2) as a remaining part of the side surface (200S), the first region (A1) and the second region (A2) being sequentially disposed along a circumference, the device (100) comprising:
a housing (110) surrounding at least the first region (A1) of the cylindrical battery (200);
a first light (120) on an inner surface of the housing (110) and configured to emit light to the side surface (200S) of the cylindrical battery (200);
a first mirror (131) and a second mirror (132) respectively disposed on both sides of the cylindrical battery (200) to each reflect light from respective portions of the first region (A1) of the cylindrical battery (200); and
a camera (140) configured to receive the light reflected from the respective portions of the first region (A1) of the cylindrical battery (200), configured to capture a first image from the light reflected by the first mirror (131), and configured to capture a second image from the light reflected by the second mirror (132),
wherein the first region (A1) of the cylindrical battery (200) is more than half of the side surface (200S) of the cylindrical battery (200),
wherein the first and second images corresponds to a full region of the first region (A1) of the cylindrical battery (200);
wherein the first light (120) includes a plurality of first lighting units (120A-K) disposed along an axial direction (X) of the cylindrical battery (200);
wherein the camera (140) is configured to capture a plurality of images of at least the first region (A1) of the cylindrical battery (200) from the light reflected by the first and second mirrors (131, 132), each image of the plurality of images corresponding to a respective time, and
wherein in each of the plurality of images, the plurality of first lighting units (120A-K) are configured to emit light to the side surface (200S) of the cylindrical battery (200) with different combinations of ones of the plurality of first lighting units (120A-K).

2. The side surface inspection device (100) for a cylindrical battery (200) according to claim 1,
wherein each of the plurality of first lighting units (120A-K) includes a plurality of light emitters (121).

3. The side surface inspection device (100) for a cylindrical battery (200) according to claim 1, further comprising:
a third mirror (150) that is disposed obliquely with respect the side surface (200S) of the cylindrical battery (200) to reflect light from the first and second mirrors (132) to form an image of at least a part of the first region (A1) of the cylindrical battery (200), and
wherein the camera (140) is configured to capture an image from light reflected by the third mirror (150).

4. The side surface inspection device (100) for a cylindrical battery (200) according to claim 3, further comprising:
a second light (160) which is disposed adjacent to the third mirror (150) to emit light to the side surface (200S) of the cylindrical battery (200),
wherein the second light (160) is a coaxial light with respect to the axial direction (X) of the cylindrical battery (200).

5. The side surface inspection device (100) for a cylindrical battery (200) according to claim 4,
wherein the second light (160) includes a plurality of second lighting units (160A-E) disposed along the axial direction (X) of the cylindrical battery (200).

6. The side surface inspection device (100) for a cylindrical battery (200) according to claim 5,
wherein the camera (140) is configured to capture a plurality of images of at least the first region (A1) of the cylindrical battery (200) from light reflected by the first and second mirrors (131, 132), each image of the plurality of images corresponding to a respective time, and
wherein, in each of the plurality of images, the plurality of second lighting units (160A-E) are configured to emit light to the side surface (200S) of the cylindrical battery (200) with different combinations of ones of the plurality of first lighting units (120A-K).

7. The side surface inspection device (100) for a cylindrical battery (200) according to claim 5,
wherein each of the plurality of second lighting units (160A-E) includes a plurality of light emitters (161).

8. The side surface inspection device (100) for a cylindrical battery (200) according to claim 1,
wherein each of the first mirror (131) and the second mirror (132) is at an angle of 45° with respect to a straight line passing through a center of the first region (A1) and a center of the second region (A2) on a cross section.

9. The side surface inspection device (100) for a cylindrical battery (200) according to claim 1, further comprising:
a conveyer (170) configured to convey the cylindrical battery (200) in the axial direction (X) of the cylindrical battery (200) so that the cylindrical battery (200) passes through the housing (110).

10. The side surface inspection device (100) for a cylindrical battery (200) according to claim 1, further comprising:
an inverter (180) configured to rotate the cylindrical battery (200) with respect to the axial direction (X) of the cylindrical battery (200) so that a second inspection can be conducted.

## Patentansprüche

1. Seitenflächeninspektionsvorrichtung (100) für eine zylindrische Batterie (200), die einen ersten Bereich (A1) als einen Teil einer Seitenfläche (200S) und einen zweiten Bereich (A2) als einen verbleibenden Teil der Seitenfläche (200S) aufweist, wobei der erste Bereich (A1) und der zweite Bereich (A2) nacheinander entlang eines Umfangs angeordnet sind, wobei die Vorrichtung (100) umfasst:
ein Gehäuse (110), das mindestens den ersten Bereich (A1) der zylindrischen Batterie (200) umgibt;
eine erste Leuchte (120) auf einer Innenfläche des Gehäuses (110) und konfiguriert, um Licht auf die Seitenfläche (200S) der zylindrischen Batterie (200) zu emittieren;
einen ersten Spiegel (131) und einen zweiten Spiegel (132), die auf einer jeweiligen der beiden Seiten der zylindrischen Batterie (200) angeordnet sind, um Licht von jeweiligen Abschnitten des ersten Bereichs (A1) der zylindrischen Batterie (200) zu reflektieren; und
eine Kamera (140), die konfiguriert ist, das von den jeweiligen Abschnitten des ersten Bereichs (A1) der zylindrischen Batterie (200) reflektierte Licht zu empfangen, konfiguriert ist, ein erstes Bild von dem durch den ersten Spiegel (131) reflektierten Licht aufzunehmen, und konfiguriert ist, ein zweites Bild von dem durch den zweiten Spiegel (132) reflektierten Licht aufzunehmen,
wobei der erste Bereich (A1) der zylindrischen Batterie (200) mehr als die Hälfte der Seitenfläche (200S) der zylindrischen Batterie (200) beträgt,
wobei das erste und das zweite Bild einem vollständigen Bereich des ersten Bereichs (A1) der zylindrischen Batterie (200) entsprechen;
wobei die erste Leuchte (120) mehrere erste Beleuchtungseinheiten (120A-K) umfasst, die entlang einer axialen Richtung (X) der zylindrischen Batterie (200) angeordnet sind;
wobei die Kamera (140) konfiguriert ist, mehrere Bilder von mindestens dem ersten Bereich (A1) der zylindrischen Batterie (200) von dem durch den ersten und den zweiten Spiegel (131, 132) reflektierten Licht aufzunehmen, wobei jedes Bild der mehreren Bilder einer jeweiligen Zeit entspricht, und
wobei in jedem der mehreren Bilder die mehreren ersten Beleuchtungseinheiten (120A-K) konfiguriert sind, Licht auf die Seitenfläche (200S) der zylindrischen Batterie (200) mit unterschiedlichen Kombinationen von einzelnen der mehreren ersten Beleuchtungseinheiten (120A-K) zu emittieren.

2. Seitenflächeninspektionsvorrichtung (100) für eine zylindrische Batterie (200) nach Anspruch 1,
wobei jede der mehreren ersten Beleuchtungseinheiten (120A-K) mehrere Lichtemitter (121) umfasst.

3. Seitenflächeninspektionsvorrichtung (100) für eine zylindrische Batterie (200) nach Anspruch 1, ferner aufweisend:
einen dritten Spiegel (150), der in Bezug auf die Seitenfläche (200S) der zylindrischen Batterie (200) schräg angeordnet ist, um Licht von dem ersten und dem zweiten Spiegel (132) zu reflektieren, um ein Bild von mindestens einem Teil des ersten Bereichs (A1) der zylindrischen Batterie (200) zu bilden, und
wobei die Kamera (140) konfiguriert ist, ein Bild von dem durch den dritten Spiegel (150) reflektierten Licht aufzunehmen.

4. Seitenflächeninspektionsvorrichtung (100) für eine zylindrische Batterie (200) nach Anspruch 3, ferner aufweisend:
eine zweite Leuchte (160), die benachbart zu dem dritten Spiegel (150) angeordnet ist, um Licht auf die Seitenfläche (200S) der zylindrischen Batterie (200) zu emittieren,
wobei die zweite Leuchte (160) eine koaxiale Leuchte in Bezug auf die axiale Richtung (X) der zylindrischen Batterie (200) ist.

5. Seitenflächeninspektionsvorrichtung (100) für eine zylindrische Batterie (200) nach Anspruch 4,
wobei die zweite Leuchte (160) mehrere zweite Beleuchtungseinheiten (160A-E) umfasst, die entlang der axialen Richtung (X) der zylindrischen Batterie (200) angeordnet sind.

6. Seitenflächeninspektionsvorrichtung (100) für eine zylindrische Batterie (200) nach Anspruch 5,
wobei die Kamera (140) konfiguriert ist, mehrere Bilder von mindestens dem ersten Bereich (A1) der zylindrischen Batterie (200) von dem durch den ersten und den zweiten Spiegel (131, 132) reflektierten Licht aufzunehmen, wobei jedes Bild der mehreren Bilder einer jeweiligen Zeit entspricht, und
wobei in jedem der mehreren Bilder die mehreren zweiten Beleuchtungseinheiten (160A-E) konfiguriert sind, Licht auf die Seitenfläche (200S) der zylindrischen Batterie (200) mit unterschiedlichen Kombinationen von einzelnen der mehreren ersten Beleuchtungseinheiten (120A-K) zu emittieren.

7. Seitenflächeninspektionsvorrichtung (100) für eine zylindrische Batterie (200) nach Anspruch 5,
wobei jede der mehreren zweiten Beleuchtungseinheiten (160A-E) mehrere Lichtemitter (161) umfasst.

8. Seitenflächeninspektionsvorrichtung (100) für eine zylindrische Batterie (200) nach Anspruch 1,
wobei jeder des ersten Spiegels (131) und des zweiten Spiegels (132) in einem Winkel von 45° in Bezug auf eine gerade Linie ist, die durch eine Mitte des ersten Bereichs (A1) und eine Mitte des zweiten Bereichs (A2) auf einem Querschnitt verläuft.

9. Seitenflächeninspektionsvorrichtung (100) für eine zylindrische Batterie (200) nach Anspruch 1, ferner aufweisend:
einen Förderer (170), der konfiguriert ist, die zylindrische Batterie (200) in der axialen Richtung (X) der zylindrischen Batterie (200) zu fördern, so dass die zylindrische Batterie (200) durch das Gehäuse (110) verläuft.

10. Seitenflächeninspektionsvorrichtung (100) für eine zylindrische Batterie (200) nach Anspruch 1, ferner aufweisend:
einen Inverter (180), der konfiguriert ist, die zylindrische Batterie (200) in Bezug auf die axiale Richtung (X) der zylindrischen Batterie (200) zu drehen, so dass eine zweite Inspektion durchgeführt werden kann.

## Revendications

1. Dispositif d'inspection d'une surface latérale (100) pour une pile cylindrique (200) possédant une première zone (A1) dans le cadre d'une surface latérale (200S), et une deuxième zone (A2) constituant une partie restante de la surface latérale (200S), la première zone (A1) et la deuxième zone (A2) étant disposées en séquence le long d'une circonférence, le dispositif (100) comprenant :
un boîtier (110) entourant au moins la première zone (A1) de la pile cylindrique (200) ;
un premier dispositif lumineux (120) sur une surface intérieure du boîtier (110), configuré pour émettre de la lumière vers la surface latérale (200S) de la pile cylindrique (200) ;
un premier miroir (131) et un deuxième miroir (132) disposés respectivement des deux côtés de la pile cylindrique (200) pour refléter chacun la lumière provenant de parties respectives de la première zone (A1) de la pile cylindrique (200) ; et
une caméra (140) configurée pour recevoir la lumière reflétée par les parties respectives de la première zone (A1) de la pile cylindrique (200), configurée d'une part pour saisir une première image de la lumière reflétée par le premier miroir (131), d'autre part pour saisir une deuxième image de la lumière reflétée par le deuxième miroir (132),
la première zone (A1) de la pile cylindrique (200) mesurant plus de la moitié de la surface latérale (200S) de la pile cylindrique (200) ,
les première et deuxième images correspondant à une zone intégrale de la première zone (A1) de la pile cylindrique (200) ;
le premier dispositif lumineux (120) comprenant une pluralité de premiers dispositifs d'éclairage (120A-K) disposés le long d'un sens axial (X) de la pile cylindrique (200) ;
la caméra (140) étant configurée pour saisir une pluralité d'images d'au moins la première zone (A1) de la pile cylindrique (200) de la lumière reflétée par les premier et deuxième miroirs (131, 132), chaque image de la pluralité d'images correspondant à un moment respectif, et
dans chacune de la pluralité d'images, la pluralité de premiers dispositifs d'éclairage (120A-K) étant configurés pour émettre de la lumière vers la surface latérale (200S) de la pile cylindrique (200) avec différentes combinaisons de celles de la pluralité de premiers dispositifs d'éclairage (120A-K).

2. Dispositif d'inspection d'une surface latérale (100) pour une pile cylindrique (200) selon la revendication 1,
chacun de la pluralité de premiers dispositifs d'éclairage (120A-K) comprenant une pluralité de sources lumineuses (121).

3. Dispositif d'inspection d'une surface latérale (100) pour une pile cylindrique (200) selon la revendication 1, comprenant en outre :
un troisième miroir (150) disposé en biais relativement à la surface latérale (200S) de la pile cylindrique (200) pour refléter la lumière provenant des premier et deuxième miroirs (132) pour constituer une image d'au moins une partie de la première zone (A1) de la pile cylindrique (200), et
la caméra (140) étant configurée pour saisir une image de la lumière reflétée par le troisième miroir (150).

4. Dispositif d'inspection d'une surface latérale (100) pour une pile cylindrique (200) selon la revendication 3, comprenant en outre :
un deuxième dispositif lumineux (160) disposé adjacent au troisième miroir (150) pour émettre de la lumière vers la surface latérale (200S) de la pile cylindrique (200),
le deuxième dispositif lumineux (160) étant un dispositif lumineux coaxial relativement à la direction axiale (X) de la pile cylindrique (200).

5. Dispositif d'inspection d'une surface latérale (100) pour une pile cylindrique (200) selon la revendication 4,
le deuxième dispositif lumineux (160) comprenant une pluralité de deuxièmes dispositifs d'éclairage (160A-E) disposés le long de la direction axiale (X) de la pile cylindrique (200).

6. Dispositif d'inspection d'une surface latérale (100) pour une pile cylindrique (200) selon la revendication 5,
la caméra (140) étant configurée pour saisir une pluralité d'images d'au moins la première zone (A1) de la pile cylindrique (200) de la lumière reflétée par les premier et deuxième miroirs (131, 132), chaque image de la pluralité d'images correspondant à un moment respectif, et
dans chacune de la pluralité d'images, la pluralité de deuxièmes dispositifs d'éclairage (160A-E) étant configurés pour émettre de la lumière vers la surface latérale (200S) de la pile cylindrique (200) avec différentes combinaisons de celles de la pluralité de premiers dispositifs d'éclairage (120A-K).

7. Dispositif d'inspection d'une surface latérale (100) pour une pile cylindrique (200) selon la revendication 5,
chacun de la pluralité de deuxièmes dispositifs d'éclairage (160A-E) comprenant une pluralité de sources lumineuses (161).

8. Dispositif d'inspection d'une surface latérale (100) pour une pile cylindrique (200) selon la revendication 1,
chacun du premier miroir (131) et du deuxième miroir (132) étant placé à angle de 45° relativement à une ligne droite traversant un centre de la première zone (A1) et un centre de la deuxième zone (A2) sur une section transversale.

9. Dispositif d'inspection d'une surface latérale (100) pour une pile cylindrique (200) selon la revendication 1, comprenant en outre :
un convoyeur (170) configuré pour transporter la pile cylindrique (200) dans le sens axial (X) de la pile cylindrique (200) de sorte que la pile cylindrique (200) passe à travers le boîtier (110).

10. Dispositif d'inspection d'une surface latérale (100) pour une pile cylindrique (200) selon la revendication 1, comprenant en outre :
un onduleur (180) configuré pour faire tourner la pile cylindrique (200) relativement au sens axial (X) de la pile cylindrique (200) afin de permettre l'exécution d'une deuxième inspection.
